# Europäisches Patentamt
# European Patent Office
# Office européen des brevets

(11) Publication number: **0 094 977**
**B1**

(12) **EUROPEAN PATENT SPECIFICATION**

(45) Date of publication of patent specification: **10.09.86**

(51) Int. Cl.⁴: **C 08 F 8/00**

(21) Application number: **82104518.4**

(22) Date of filing: **24.05.82**

(54) **Novel block copolymers including acrylonitrile sequences and glutarimide units and processes for preparing same.**

(43) Date of publication of application:
**30.11.83 Bulletin 83/48**

(45) Publication of the grant of the patent:
**10.09.86 Bulletin 86/37**

(84) Designated Contracting States:
**BE CH DE FR GB IT LI NL**

(56) References cited:
**FR-A-1 502 901**
**US-A-4 173 606**

(73) Proprietor: **S.K.Y. POLYMERS INC.**
**92 Clover Lane**
**Princeton New Jersey 08540 (US)**

(72) Inventor: **Stoy, Vladimir A.**
**281 Jefferson Road**
**Princeton, N.J. 08540 (US)**

(74) Representative: **LOUIS, PÖHLAU, LOHRENTZ & SEGETH**
**Kesslerplatz 1 P.B. 3055**
**D-8500 Nürnberg (DE)**

Courier Press, Leamington Spa, England.

## Description

This invention relates to novel block copolymers including acrylonitrile sequences, and more particularly to novel block copolymers comprised of acrylonitrile sequences and sequences including as a major portion glutarimide units and process for preparing same.

In copending European Patent application of the filing date as the present application (publication No 0094980; title: 'Novel Polymer Composition including Polyacrylonitrile Polymers and Process for preparing same') there are disclosed novel polymer compositions comprised of polyacrylonitrile polymer and block copolymer having acrylonitrile and non-crystalline polymer sequences and a process for forming such polymer compositions. Block copolymers of acrylonitrile sequences with another polymer sequences, for example, acrylamide are a two phase structure separated into domains wherein the acrylonitrile domain has a like crystalline structure to polyacrylonitrile polymer.

Such block copolymers may be readily formed by the controlled acid catalyzed hydrolysis of polyacrylonitrile polymer, and are highly swellable in water with a swelling capacity dependent on the ratio of both sequences and on the number of separate domains. Generally, the block copolymers exhibit considerable strength in the swollen state caused by the two phase structure and crystallinity of the acrylonitrile domains. The block copolymers have been shaped by pressure in the swollen state or from thermo-reversible gels (TRG), such as disclosed in United States Patents No. 4.053.442 and No. 4.173.606, respectively.

With the acid catalyzed hydrolysis of polyacrylonitrile to form the acrylonitrole-acrylamide (and some acrylic acid units) block copolymers, some glutarimide units may be formed, and if formed, are small and in an amount insufficient to influence the properties of the acrylic acid-acrylamide block copolymers, i.e. hydrophilicity. The multi-block copolymers of acrylonitrile sequences with acrylamide or acrylamide and acrylic acid sequences exhibit excellent mechanical properties, but their use is limited by water swelling capabilities.

Under certain conditions, the acid catalyzed hydrolysis of polyacrylonitrile yields water insoluble copolymers (not block copolymers) of a high glutarimide content but without acrylonitrile units in crystallizable sequence. Such glutarimide containing copolymers exhibit poor mechanical properties and are, as a rule, considered to be undesirable intermediate products of a process leading to the water-soluble acrylic polymers, i.e. polyacrylic acid or the water-soluble acrylamide-acrylic acid copolymers.

An object of the present invention is to provide novel block copolymers.

Another object of the present invention is to provide novel block copolymers having acrylonitrile sequences and sequences including glutarimide units.

Still another object of the present invention is to provide novel block copolymer compositions having acrylonitrile sequences and sequences including glutarimide units and exhibiting outstanding mechanical properties.

Another object of the present invention is to provide novel block copolymers having acrylonitrile sequences and sequences including glutarimide units and having a major proportion of glutarimide units thereby exhibiting properties of high impact resistance.

Still another object of the present invention is to provide novel processes for preparing such novel block copolymers.

A further object of the present invention is to provide novel processes for preparing such novel block copolymers from polyacrylonitrile polymers.

These and other objects of the present invention are achieved by block copolymers having acrylonitrile sequences or acrylonitrile-styrene sequences and sequences comprised of a major portion of glutarimide units of a molecular weight of from about 10.000 to about 2.000.000 where the acrylonitrile sequences and the sequences including glutarimide units are of a molecular weight of at least about 400 and are essentially of a two phase structure with an acrylonitrile and glutarimide domains wherein the acrylonitrile domains exhibit crystalline structure similar to polyacrylonitrile and the glutarimide domains exhibit an amorphous structure. The molecular weight of the copolymers according to the invention is preferably from 40.000 to 550.000.

The properties of the novel block copolymers are preselectable by varying the mole percent of acrylonitrile to glutarimide in the block copolymers as well as by varying the number and the molecular weight of the sequences.

The block copolymers of the present invention are readily prepared from block copolymers of acrylonitrile sequences with acrylamide sequences or acrylamide and acrylic acid sequences in the presence of an acid catalyst. In one embodiment, the block copolymers of the present invention are prepared directly from polyacrylonitrile.

An acrylonitrile sequence is a continuous sequence of acrylonitrile units of a molecular weight of at least about 400, and preferably of at least about 600. The sequences including a major portion of glutarimide units is a continuous sequence having a molecular weight of at least about 400 and preferably at least about 750. In one embodiment, the glutarimide sequences include at least 55 mole percent of glutarimide units. The number of sequences per polymer chain is at least 2 and preferably of from 5 to about 1.000, preferably not more than about 250.

The block copolymers of the present invention are comprised of two types of rigid, water nonswellable blocks which are incompatible with one another. Notwithstanding, solubility in some common solvents for polyacrylonitrile and polyglutarimide, such types form two phase structure once the solvents are removed. One of the phases is comprised of a major portion of the acrylonitrile sequences and form crystalline domains of a crystalline structure similar to the crystalline structure of polyacrylonitrile. A typical structure feature of the crystalline domains manifests itself by the x-ray diffraction pattern with a main reflexion corresponding to the periodicity of about 0,52 nm (5.2 Å) which can be rearranged under stress to the equatorial position indicating a lateral organization. The other phase is essentially amorphous and are the sequences containing as a major portion, the glutarimide units.

The difference is structural configuration between polyglutarimide and polyacrylamide, i.e. chain structure versus potential to intra-chain bonding result in decreased swelling capacity and increased thermal resistance of the block copolymers of the present invention compared with block copolymers of acrylonitrile sequences with sequences of acrylamide units of acrylamide and acrylic acid units.

The block copolymers of the present invention exhibit, *inter alia,* the following properties:

1. High tensile strength, high modulus of elasticity and high impact resistance in both the dry and swelled states;

2. Deformation and orientation at elevated temperatures under stress facilitating processing and shaping of the block copolymers;

3. Temperature resistance and slow change of mechanical properties to temperature change;

4. Controllable swelling capacity from about 0,2 to about 40% by weight of water regardless of acrylonitrile content;

5. Controllable differences between the properties in the dry and the swollen state;

6. Barrier properties to most of the organic solvents, especially to alcohols, ketones, aliphatic and aromatic hydrocarbons and their halogenated derivatives;

7. Controlled permeability to water and aqueous solutes including gases, such as oxygen and carbon dioxide;

8. Excellent barrier properties to gases when the swellability is less than about 5 percent by weight of water; and

9. Good hydrolytic resistance in contact with water and acidic and neutral aqueous solutions.

The amount of the acrylonitrile units of the block copolymers may vary from about 1 to about 99 mole percent, and preferably of from about 5 to about 95 mole percent. For one set of block copolymers, the amount of the acrylonitrile units is from about 50 to about 99 mole percent, preferably from about 50 to about 95 mole percent whereas for another set of block copolymers the amount of acrylonitrile is from about 5 to about 50 mole percent.

For block copolymers having from 50 to 99 mole percent acrylonitrile, i.e. 1 to 50 mole percent of the sequence including a major portion of the glutarimide units, the fibrillar structure is well developed with the amorphous phase forming envelopes of the polyacrylonitrile fibriles thereby exhibiting mechanical properties resembling polyacrylonitrile, namely, readily stress orientable thereby forming a laterally organized structure. Such block copolymers are particularly useful in the manufacture of products requiring high strength, barrier properties, high resistance to water and organic solvents, namely products such as tubing, bottles, containers, fuel tanks and wrapping foils. The content of the glutarimide units for these block copolymers is preferably of from 5 to 40 mole percent.

The block copolymers of the present invention having of from 1 to 50 mole percent of acrylonitrile averaged in sequences exhibit a two phase structure forming more or less a continuous fibrillar network throughout the amorphous phase of sequences of the glutarimide units, or discrete "knots" of the crystalline domains binding the glutarimide-containing polymer chains into a continuous physical network. The continuous polyacrylonitrile prevails when the acrylonitrile content is more than about 33 mole percent, while the discrete domains of polyacrylonitrile embedded in the continuous amorphous phase prevail outside such range. The block copolymers having less than 50 mole percent acrylonitrile possess outstanding mechanical strength but with reduced orientability and are very tough and impact resistant.

The block copolymers may be formed with hydrophobic units, such as acrylamide and/or acrylic acid units incorporated into the glutarimide sequences thereby increasing the flexibility as well as hydrophility thereof of the sequences including the glutarimide units, as much as 49 mole percent preferably less than 35 mole percent and advantageously below about 25 mole percent may be formed of such hydrophilic units.

The primary difference between polyacrylonitrile and the novel block copolymers of the present invention is that while polyacrylonitrile is a single-phase structure, the block copolymers are comprised of pre-formed fibriles of finite size rearrangeable under stress as whole units without being substantially internally reorganized. In the single phase of polyacrylonitrile, there are none such pre-organized structures so that polyacrylonitrile must be completely reorganized under stress to obtain orientation. The effects of this difference are enhanced shaping of the copolymer compositions and improved strength, tear strength and impact resistance. The hydrophobic nature of the glutarimide containing sequences result in properties not impaired by contact with water as is the case with the hereto known multi-block copolymers of acrylonitrile.

The block copolymers are soluble in highly polar solvents, such as the hereinabove mentioned polyacrylonitrile solvents, or in mixture of such solvents with other polar solvents, e.g. dimethyl sulfoxide DMSO, DMSO-glycerol mixture, dimethylformamide (DMF) concentrated nitric acid (50—75%), and others. Additionally, the block copolymers are considerably stable with regard to acids, even concentrated acids such as sulfuric and nitric acids, and thus, are not readily hydrolyzable in neutral or acidic solutions even at elevated temperatures. On the other hand, the block copolymers are readily attacked by bases to form other novel block copolymers.

The block copolymers of the present invention are distinguishable from other copolymers, as follows:

1) IR spectroscopy reveals CN-band at 2240 $cm^{-1}$ and glutarimide-band at about 1200-1220 $cm^{-1}$ together with a $CH_2$ band at 2940 $cm^{-1}$ which can be used as an internal standard for quantitative estimation of the acrylonitrile and glutarimide concentration.

2) Treatment of the copolymers by an aqueous solution of NaOH (pH 8 to 10) causes considerable swelling of the copolymers and vanishing of the glutarimide-band in the IR-spectrum.

3) Potentiometric titration of the copolymers dissolved in DMSO by very diluted aqueous NaOH solutions reveals two waves corresponding to the content of the —COOH groups present in the copolymer and the content of the —COOH groups formed by the hydrolysis of glutarimide. The molar content of the latter corresponds to the molar content of glutarimide prior to the titration.

4) Treatment of the copolymer with warm 10% aqueous NaOH solution causes extensive swelling and eventual dissolution in water accompanied by vanishing of both acrylonitrile and glutarimide bands in the IR spectrum. The copolymers simultaneously turns to yellow, orange, red or brown; this change of color indicates that the acrylonitrile groups were arranged in continuous sequences.

5) X-ray diffraction reveals a pattern identical to that of polyacrylonitrile itself, but the crystalline reflexes are accompanied by an amorphous halo. This indicates that two phase structure with the crystalline and the amorphous domains.

6) $^{13}C$ NMR spectroscopy permits the thorough analysis with proof of concentration of both acrylonitrile and glutarimide and determination of the length of the respective sequences.

7) The considerable reactivity of glutarimide provides another tool for identification of the copolymer according to the present invention.

The novel block copolymers are readily prepared by treating block copolymers having acrylonitrile sequences with acrylamide or acrylamide and acrylic acid sequences (no more than 66 mole percent acrylic acid based upon the acrylamide and acrylic acid content) with its acid catalysts at a temperature of from about 15 to about 185°C, preferably of from 35 to 125°C and generally in the presence of a highly polar solvent.

The strong acid catalyst include hydrochloric acid, hydrofluoric acid, trifluoracetic acid, nitric acid, sulphuric acid, phosphoric acid, toluenesulfonic acid, sulfur trioxide, and nitrogen oxides. The highly polar solvents include those polyacrylonitrile solvents, such as nitric acid, dimethylsulfoxide (DMSO), DMSO-glycerol solutions and dimethylformamide (DMF). It is noted that nitric acid (like other strong acids) is a complex mixture of compounds-non-ionized pseudo-acids (which is a solvent) and various hydrates (which are catalysts). The composition depends on dilution (increased concentration leads to increased concentration of pseudo-acids).

It will be understood that not all of the acrylamide units or acrylamide and acrylic acid units may be converted to the glutarimide units due to odd number juxtaposition of the acrylamide and acrylic acid units.

Reaction times are from about 0,5 to 300 minutes or longer with longer reaction times required to form block copolymers of greater concentration of glutarimide units.

As hereinbefore discussed, block copolymer precursor of the present invention may be prepared by diverse manners and does not constitute a part of the present invention. As readily understood by one skilled in the art, the formation of the glutarimide units involves cyclization reactions of acrylamide units or acrylamide and acrylic acid units, and has been observed to be particularly accelerated in the presence of nitrogen oxides, particularly the oxide of nitric acid.

The use of nitric acid is particularly advantageous since the formation of the precursor block copolymer may be effected in the presence of nitric acid with subsequent hydrolysis of the block copolymer precursor being effected by increasing the temperature (to about 30 to 60°C) with concomitant introduction of a small amount of a reducing agent. Additionally, recovery of the block copolymer in the presence of nitric acid, as more fully hereinafter discussed, is easily effected by addition to the system of a neutralizing agent, such as urea, quanidine, and potassium carbonate.

Recovery of the block copolymers of the present invention may be effected in a plurality of ways depending on the reaction system in which the block copolymers are formed. If the solvent and/or acid catalyst are sufficiently volatile, the block copolymer is recovered by evaporation of the solvent and/or catalyst. Volatile acid catalyst include $SO_3$, HCl, HF and $NO_x$, with volatile solvents including DMSO, DMF and nitric acid. The block copolymers are readily extracted from the reaction system with a liquid miscible therewith but immiscible with the dissolved block copolymers. Such miscible liquids include water, aqueous solutions, low aliphatic alcohols, ketones and glycols. The block copolymer may be recovered by neutralization of the acid catalyst as hereinabove discussed. In this regard, some of the solvent may be neutralized, e.g. neutralization of zinc chloride by sodium carbonate. In the preparation of sponges, it is advantageous to neutralize the solvent under conditions to form a water insoluble salt thereby forming a solid salt-block copolymer whereby subsequent extraction of the salt results in the desired cell structure.

For certain applications, the block copolymer of the present invention is subjected to a reaction system to hydrolyze the glutarimide units to acrylamide units and results in a block copolymer assisting essentially of acrylonitrile and acrylamide sequences, i.e. a block copolymer without carboxylic groups.

The following examples are illustrative of conditions for the process of the present invention.

### Example I

The precursor multiblock acrylonitrile-acrylamide copolymer is prepared in a conventional manner by dissolving polyacrylonitrile (M.W. 150.000) in a solution of 70% nitric acid and 98% sulfuric acid (weight ratio of the acids 2:1). The solution is maintained at 15°C until 38 mole percent of the acrylonitrile groups are hydrated with the resulting copolymer isolated by pouring the solution into an excess of water to precipitate the block copolymer. The washed and dried acrylonitrile-acrylamide block copolymer contained 55 percent weight of acrylonitrile units arranged in sequences with an average molecular weight of 1.500; 43,5 percent by weight of acrylonitrile units and 1,5 percent by weight of acrylic acid units arranged into sequences with an average molecular weight of 1230.

Twenty parts by weight of the resulting block copolymer are dissolved at 110°C in 180 parts by weight of DMSO and into which is introduced a stream of dry nitrogen mixed with HCl. After 30 minutes, the resulting solution is cooled with onehalf poured into an excess of water. The precipitated block copolymer (AN—GIM—AM) is washed with methanol and vacuum-dried. The product had the following composition: 57,40 percent by weight of acrylonitrile units arranged into the sequences with average molecular weight of about 1.500; 33,2 percent by weight of glutarimide units and 9,4 percent by weight of acrylamide units arranged randomly into sequences with an average molecular weight of 1110.

The product is practically non-swellable in water and exhibits an x-ray diffraction typical of a polyacrylonitrile pattern with a main reflexion corresponding to about 0,52 nm (5.2 Å) with an accompanying amorphous halo.

Fifty parts by weight of the powdered block copolymer (AN—GIM—AM) are mixed with fifty parts by weight of dimethylformamide and extruded at 140°C through a slot nozzel into a water bath. The thus formed membrane is washed and monoaxially oriented at 150°C to yield an oriented transparent foil possessing excellent mechanical and barrier properties.

### Example II

Polyacrylonitrile (MW. = 875.000) is dissolved in an aqueous solution of sodium rhodanide and sodium hydroxide (60 percent by weight and 5% percent by weight, respectively). The polymer solution is heated to 75°C until the polymer gelled (turned to dark red-brown) and then redissolved (honey-yellow color). The thus formed copolymer is precipitated by water and is a highly swellable multiblock copolymer (about 97% by weight of water) consisting of 11 mole percent of acrylonitrile, 52 mole percent of acrylamide and 37 mole percent of sodium acrylate. The solution is cooled and extruded into water to form a membrane about 0,5 mm thick in a swollen state. The swollen membrane is washed and exposed on one side to a 10 percent nitric acid solution.

The membrane contracted as whole (the sodium acrylate is converted into acrylic acid) and a skin of yellow, turbid, non-swellable polymer about 0,1 mm thick is formed on the exposed side. Analysis of the skin revealed a multiblock copolymers of acrylonitrile-glutarimide-acrylamide (19,7 mole percent acrylonitrile; 66,8 mole percent of glutarimide; 13,4 mole percent of acrylamide; 0,1 mole percent of acrylic acid) with an average molecular weight of the acrylonitrile sequences of 550. The membrane is fixed in a frame and dried. When swelled again, the membrane is formed of two layers, one of which is highly swellable in water and highly permeable to aqueous solutes while the other layer is essentially non-swellable and non-permeable. Asymetric membranes of such type are useful in ultrafiltration techniques.

### Example III

Twenty percent by weight acrylonitrile and eighty percent by weight of 68% nitric acid is mixed with 0,2 percent by weight of ammonium persulfate and maintained at 20°C until 85 mole percent of the acrylonitrile is converted to acrylamide (less than 2% acrylic acid units). Five weight percent of 10% aqueous sodium metabisulfate is added and the polymer solution maintained at 45°C for five hours. The solution is cooled and there is added 52 percent by weight urea with the mixture thereafter kneaded and extruded at a barrel temperature of 50°C to form granules or pellets. The granules are admixed with calcium carbonate. The granules constituted poorly soluble ureamononitrate encapsulated in water non-swellable block copolymers of acrylonitrile-acrylamide-glutarimide sequences (51 mole percent glutarimide; 24,7 mole percent acrylamide and 22,7 mole percent acrylonitrile) and protected the nitrate from dissolving.

The acidic ureamononitrate protected the block copolymer against hydrolysis by alkali as long as the same is present in the outer layer. The ureamononitrate reacted with the calcium carbonate to form soluble calcium nitrate and urea. Upon depletion of the ureamononitrate, the outer layer of the block copolymer became hydrolyzed gradually as the pH reached 7,0 and thus converted into a highly permeable multiblock hydrogel thereby further exposing ureamononitrate. The net result is enhanced utilization of the nitrogen as a plait nutrient as well as diminished pollution of water by dissolved nitrates. Additionally, the hydrogel particles acted as a soil-conditioner and accumulator for water.

### Example IV

The process of Example III is repeated except that only 40 percent by weight urea is added and the product extruded with crystalline sodium carbonate at ambient temperatures into water to form a spongy foam sheet. The sheet is washed with isopropanol aqueous solution and finally with a 3% glycerol in methanol solution. The resulting material is centrifuged and dried to form highly swellable sponges for medical purposes.

### Example V

Fifty parts by weight of a polyacrylonitrile-styrene copolymer (90:10 by weight, M.W. = 50.000) is mixed at 60°C with 40 parts by weight of $ZnCl_2$, 10 parts by weight of 37 percent HCl and 8 parts by weight of water. The mass is masticated at 60°C for three hours in a kneader. A rubbery solution is extruded into a coagulation bath of 20 percent aqueous $ZnCl_2$ at 4°C and then extracted through a screw having a barrel temperature of 100°C and a head temperature of 125°C. The thus formed pipe is washed with water and then in a one percent solution of sodium bicarbonate. The block copolymer analyzed as 7,5 mole percent of glutarimide with an x-ray analysis revealing a two-phase structure.

The inner surface of the pipe is treated with a solution of caustic soda for several minutes at ambient temperature and forms a thin hydrogel layer. The frictional factor of water running through the tube is about 15 percent lower than for PVC pipe of like dimension. A portion of the tube is sliced into 25.4 mm (1 inch) lengths for use as loose packing in an absorber tower. The efficiency of the packing for absorbing ammonia into water from a mixture thereof is nearly twice that of polypropylene packing having similar geometry.

## Claims

1. A block copolymer having acrylonitrile sequences, or acrylonitrile styrene sequences, and sequences comprised of a major portion of glutarimide units and having a molecular weight of from about 10.000 to about 2.000.000 where the acrylonitrile sequences and the sequences including glutarimide units are of a molecular weight of at least about 400 and are essentially of a two phase structure with an acrylonitrile and glutarimide domains wherein the acrylonitrile domains exhibit crystalline structure similar to polyacrylonitrile and the glutarimide domains exhibit an amorphous structure.

2. The block copolymers as defined in Claim 1 wherein said molecular weight is from 40.000 to 550.000.

3. The block copolymer as defined in Claims 1 or 2 wherein said molecular weight of said acrylonitrile sequences is preferably at least 600 and said molecular weight of said other sequences is preferably at least 750.

4. The block copolymer as defined in Claims 1, 2 or 3 wherein there are at least two acrylonitrile sequences and at least two of the other sequences.

5. The block copolymer as defined in Claim 4 wherein there are preferably at least five sequences.

6. The block copolymer as defined in Claims 1, 2, 3, 4 or 5 wherein said acrylonitrile sequences equal the sequences of said major portion of glutarimide units.

7. The block copolymer as defined in Claim 1 or 2 or 3 to 6 wherein said acrylonitrile sequences comprises of from 1 to 99 mole percent of said block copolymer.

8. The block copolymer as defined in Claim 7 wherein said acrylonitrile sequences are comprised of from 50 to 95 mole percent of said block copolymer.

9. The block copolymer as defined in Claim 7 wherein said acrylonitrile sequences are comprised of from 1 to 50 mole percent of said block copolymer composition.

10. The block copolymer composition as defined in Claims 1 or 2 or 3 to 9 wherein said sequences including a major portion of said glutarimide units also include acrylamide units.

11. The block copolymer composition as defined in Claims 1 or 2 or 3 to 9 wherein said sequences including a major portion of glutarimide units also include acrylamide and acrylic acid units.

12. The block copolymer as defined in Claims 10 or 11 wherein said sequences including glutarimide units includes at least 55 mole percent of said glutarimide units.

13. A process for producing a block copolymer as defined in claim 1 comprised of acrylonitrile sequences and sequences including a major portion of glutarimide units, which comprises;

a) contacting a precursor block copolymer comprised of acrylonitrile sequences and acrylamide sequences with a strong acid catalyst at a temperature of between 15 and 185°C for a time sufficient to effect conversion of units forming said acrylamide sequences to glutarimide units; and

b) recovering said block copolymer comprised of acrylonitrile sequences and sequences including a major portion of glutarimide units.

14. The process for forming the block copolymer as defined in Claim 13 wherein step a) is preferably effected at a temperature of from 35 to 125°C.

15. The process for forming the block copolymer as defined in Claim 13 wherein said block copolymer comprised of acrylonitrile and acrylamide sequence includes acrylic acid units in the acrylamide sequence.

16. The process for forming the block copolymer as defined in Claim 15 wherein said acrylic acid units comprise less than about 66 mole percent of the acrylamide and acrylic acid units.

17. The process for forming the block copolymer as defined in Claims 13, 14, 15 or 16 wherein said strongly acid catalyst is selected from the group consisting of hydrochloric acid, hydrofluoric acid, trifluoroacetic acid, sulfuric acid, nitric acid, phosphoric acid, toluenesulfonic acid, sulfur trioxide and nitrogen oxides.

18. The process for forming the block copolymer as defined in Claims 13 or 14 to 17 and additional including a solvent for the precursor block copolymer solvents include nitric acid, DMSO and DMF.

19. The process as defined in Claims 13 or 14 to 18 wherein said block copolymer of step b) is recovered by evaporating said acid catalyst.

20. The process as defined in Claims 13 or 14 to 18 wherein said block copolymer of step b) is recovered by neutralizing said acid catalyst.

21. The process as defined in Claim 20 wherein neutralization is effected with a material which also neutralizes a solvent.

22. The process as defined in Claim 21 wherein a salt resulting from neutralization is substantially insoluble in water.

23. The process as defined in Claim 13 or 14 to 18 wherein said block copolymer of step b) is recovered by extraction with a liquid in which said block copolymer is immicisible.

24. The process for producing a block copolymer as defined in Claim 1 comprised of acrylonitrile sequences and sequences including a major portion of glutarimide units, which comprises:

a) contacting polyacrylonitrile with nitric acid for a time sufficient to hydrolyze some of the acrylonitrile units to acrylamide and acrylic acid units;

b) adding a strongly polar solvent to the product of step a);

c) increasing the temperature of the resulting mixture and maintaining said temperature for a time sufficient to effect conversion of units forming said acrylamide sequence to glutarimide units; and

d) recovering said block copolymer comprised of acrylonitrile sequences and sequences including a major portion of glutarimide units.

25. The process as defined in Claim 24 wherein a base is added to the mixture of step c) to effect recovery of said block copolymer.

## Revendications

1. Copolymère bloc comprenant des séquences d'acrylonitrile, ou bien des séquences d'acrylonitrile-styrène, et des séquences constituées par une portion importante d'unités de glutarimide et ayant un poids moléculaire d'environ 10.000 à environ 2.000.000, dans lequel les séquences d'acrylonitrile et les séquences contenant des unités de glutarimide ont un poids moléculaire d'au moins environ 400 et sont essentiellement sous la forme d'une structure à deux phases avec des domaines d'acrylonitrile et de glutarimide, les domaines d'acrylonitrile montrant une structure cristalline similaire à du polyacrylonitrile et les domaines de glutarimide montrant une structure amorphe.

2. Copolymère bloc suivant la revendication 1, caractérisé en ce que le poids moléculaire est de 40.000 à 550.000.

3. Copolymère bloc suivant l'une ou l'autre des revendications 1 et 2, caractérise en ce que le poids moléculaire des séquences d'acrylonitrile est de préférence d'au moins 600 et le poids moléculaire de ces autres séquences est de préférence d'au moins 750.

4. Copolymère bloc suivant l'une quelconque des revendications 1 à 3, caractérisé en ce qu'il comporte au moins deux séquences d'acrylonitrile et au moins deux de ces autres séquences.

5. Copolymère bloc suivant la revendication 4, caractérisé en ce qu'il comporte de préférence au moins 5 séquences.

6. Copolymère bloc suivant l'une quelconque des revendications 1 à 5, caractérisé en ce que les séquences d'acrylonitrile égalent les séquences de la partie importante d'unités de glutarimide précitée.

7. Copolymère bloc suivant l'une ou l'autre des revendications 1 et 2 ou suivant l'une quelconque des revendications 3 à 6, caractérisé en ce que les séquences d'acrylonitrile constituent de 1 à 99 moles % du copolymère bloc.

8. Copolymère bloc suivant la revendication 7, caractérisé en ce que les séquences d'acrylonitrile constituent de 50 à 95 moles % du copolymère bloc.

9. Copolymère bloc suivant la revendication 7, caractérisé en ce que les séquences d'acrylonitrile constituent de 1 à 50 moles % de la composition de copolymère bloc.

10. Composition de copolymère bloc suivant l'une ou l'autre des revendications 1 et 2 ou suivant l'une quelconque des revendications 3 à 9, caractérisée en ce que les séquences contenant une partie importante d'unités de glutarimide contiennent également des unités d'acrylamide.

11. Composition de copolymère bloc suivant l'une ou l'autre des revendications 1 et 2 ou suivant l'une quelconque des revendications 3 à 9, caractérisée en ce que les séquences contenant une portion importante d'unités de glutarimide contiennent également des unités d'acrylamide et d'acide acrylique.

12. Copolymère bloc suivant l'une ou l'autre des revendications 10 et 11, caractérisé en ce que les séquences contenant des unités de glutarimide contiennent au moins 55 moles % d'unités de glutarimide.

13. Procédé de production d'un copolymère bloc suivant la revendication 1, constitué par des séquences d'acrylonitrile et des séquences contenant une partie important d'unités de glutarimide, qui comprend:

a) la mise en contact d'un copolymère bloc précurseur formé de séquences d'acrylonitrile et de séquences d'acrylamide avec un catalyseur d'acide fort à une température se situant entre 15 et 185°C pendant une période de temps suffisante pour effectuer la conversion des unités formant des séquences d'acrylamide en unités de glutarimide; et

b) la récupération de ce copolymère bloc formé de séquences d'acrylonitrile et de séquences contenant une partie importante d'unités de glutarimide.

14. Procédé de formation du copolymère bloc suivant la revendication 13, caractérisé en ce que l'étape a) est de préférence réalisée à une température de 35 à 125°C.

15. Procédé de formation du copolymère bloc suivant la revendicatioń 13, caractérise en ce que le copolymère bloc formé de séquences d'acrylonitrile et d'acrylamide contient des unités d'acide acrylique dans la séquence d'acrylamide.

16. Procédé de formation du copolymère bloc suivant la revendication 15, caractérisé en ce que les unités d'acide acrylique précitées constituent moins d'environ 66 moles % des unités d'acrylamide et d'acide acrylique.

17. Procédé de formation du copolymère bloc suivant l'une quelconque des revendications 13 à 16, caractérisé en ce que le catalyseur fortement acide est choisi dans le groupe comprenant l'acide chlorhydrique, l'acide fluorhydrique, l'acide trifluoroacétique, l'acide sulfurique, l'acide nitrique, l'acide phosphorique, l'acide toluènesulfonique, le trioxyde de soufre et les oxydes d'azote.

18. Procédé de formation du copolymère bloc suivant la revendication 13 ou l'une quelconque des revendications 14 à 17, et comprenant en outre un solvant pour le copolymère bloc précurseur, solvant choisi parmi l'acide nitrique, le DMSO et le DMF.

19. Procédé suivant la revendication 13 ou l'une quelconque des revendications 14 à 18, caractérisé en ce que le copolymère bloc de l'étape b) est récupéré par évaporation du catalyseur d'acide précité.

20. Procédé suivant la revendication 13 ou l'une quelconque des revendications 14 à 18, caractérisé en ce que le copolymère bloc de l'étape b) est récupéré par neutralisation du catalyseur d'acide précité.

21. Procédé suivant la revendication 20, caractérisé en ce que la neutralisation est effectuée avec une matière qui neutralise également un solvant.

22. Procédé suivant la revendication 21, caractérisé en ce qu'un sel résultant de la neutralisation est essentiellement insoluble dans l'eau.

23. Procédé suivant la revendication 13 ou l'une quelconque des revendications 14 à 18, caractérisé en ce que la copolymère bloc de l'étape b) est récupéré par extraction au moyen d'un liquide dans lequel le copolymère bloc est non miscible.

24. Procédé de production d'un copolymère bloc suivant la revendication 1, formé de séquences d'acrylonitrile et de séquences contenant une portion importante d'unités de glutarimide, qui comprend

a) la mise en contact de polyacrylonitrile avec de l'acide nitrique pendant une période de temps suffisant pour hydrolyser une certaine quantité d'unités d'acrylonitrile en unités d'acrylamide et d'acide acrylique;

b) l'addition d'un solvant fortement polaire au produit de l'étape a);

c) l'élévation de la température du mélange résultant et le maintien de cette température pendant une période de temps suffisant pour effectuer la conversion des unités formant la séquence d'acrylamide précitée en unités de glutarimide; et

d) la récupération de ce copolymère bloc formé de séquences d'acrylonitrile et de séquences contenant une portion importante d'unités de glutarimide.

25. Procédé suivant la revendication 24, caractérisé en ce que l'on ajoute une base au mélange de l'étape c) pour effectuer la récupération du copolymère bloc précité.

## Patentansprüche

1. Block-Copolymer, das Acrylnitril- oder Acrylnitril-Styrol-Sequenzen sowie Sequenzen, die größtenteils aus Glutarimid-Einheiten bestehen, enthält und ein Molekulargewicht von etwa 10.000 bis etwa 2.000.000 aufweist, wobei die Acrylnitril- und die die Glutarimid-Einheiten enthaltenden Sequenzen ein Molekulargewicht von etwa 400 und im wesentlichen eine Zweiphasenstruktur mit Acrylnitril- und Glutarimid-Bereichen aufweisen, wobei die Acrylnitril-Bereiche eine dem Polyacrylnitril ähnliche kristalline Struktur und die Glutarimid-Bereiche eine amorphe Struktur zeigen.

2. Block-Copolymer nach Anspruch 1, dadurch gekennzeichnet, daß das Molekulargewicht zwischen 40.000 und 550.000 liegt.

3. Block-Copolymer nach den Ansprüchen 1 oder 2, dadurch gekennzeichnet, daß das Molekulargewicht der Acryl-nitril-Einheiten vorzugsweise mindestens 600 und das Molekulargewicht der anderen Sequenzen vorzugsweise mindestens 750 beträgt.

4. Block-Copolymer nach den Ansprüchen 1, 2 oder 3, dadurch gekennzeichnet, daß mindestens zwei Acrylnitril-Sequenzen und mindestens zwei andere Sequenzen vorliegen.

5. Block-Copolymer nach Anspruch 4, dadurch gekennzeichnet, daß vorzugsweise mindestens fünf Sequenzen vorhanden sind.

6. Block-Copolymer nach den Ansprüchen 1, 2, 3, 4 oder 5, dadurch gekennzeichnet, daß die Acrylnitril-Sequenzen den hauptsächlich aus Glutarimid-Einheiten gebildeten Sequenzen gleich sind.

7. Block-copolymer nach Anspruch 1 oder 2 oder 3 bis 6, dadurch gekennzeichnet, daß die Acrylnitril-Sequenzen 1 bis 99 Mol% des Blockcopolymeren ausmachen.

8. Block-Copolymer nach Anspruch 7, dadurch gekennzeichnet, daß die Acrylnitril-Sequenzen 50 bis 95 Mol% des Block-Copolymeren ausmachen.

9. Block-Copolymer nach Anspruch 7, dadurch gekennzeichnet, daß die Acrylnitril-Sequenzen 1 bis 50 Mol% der Block-Copolymer-Zusammensetzung ausmachen.

10. Block-Copolymer-Zusammensetzung nach Ansprüchen 1 oder 2 oder 3 bis 9, dadurch gekennzeichnet, daß die hauptsächlich aus Glutarimid-Einheiten bestehenden Sequenzen auch Acrylamid-Einheiten enthalten.

11. Block-Copolymer-Zusammensetzung nach den Ansprüchen 1 oder 2 oder 3 bis 9, dadurch gekennzeichnet, daß die hauptsächlich Glutarimid-Einheiten enthaltenden Sequenzen auch Acrylamid- und Acrylsäure-Einheiten enthalten.

12. Block-Copolymer nach Anspruch 10 oder 11, dadurch gekennzeichnet, daß die die Glutarimid-Einheiten enthaltenden Sequenzen mindestens 55 Mol% Glutarimid-Einheiten enthalten.

13. Verfahren zur Herstellung eines Block-Copolymeren nach Anspruch 1, das Acrylnitril-Sequenzen und hauptsächlich aus Glutarimid-Einheiten bestehende Sequenzen enthält, dadurch gekennzeichnet, daß

a) ein Vorläufer-Block-Copolymer, das Acrylnitril-Sequenzen und Acrylamid-Sequenzen enthält, mit einem stark sauren Katalysator bei einer Temperatur zwischen 15 und 185°C während einer für die Umwandlung der die Acrylamid-Sequenzen bildenden Einheiten in Glutarimid-Einheiten ausreichenden Zeitdauer in Kontakt gebracht wird,

b) daß Block-Copolymere, das Acrylnitril-Sequenzen und hauptsächlich aus Glutarimid-Einheiten gebildete Sequenzen enthält, gewonnen wird.

14. Verfahren zur Bildung eines Block-Copolymeren nach Anspruch 13, dadurch gekennzeichnet, daß die Stufe a) vorzugsweise bei einer Temperatur von 35 bis 125°C durchgeführt wird.

15. Verfahren zur Bildung des Block-Copolymeren nach Anspruch 13, dadurch gekennzeichnet, daß das Acrylnitril-und Acrylamid-Sequenzen enthaltende Block-Copolymer Acrylsäure-Einheiten in der Acrylamid-Sequenz enthält.

16. Verfahren zur Bildung eine Block-copolymeren nach Anspruch 15, dadurch gekennzeichnet, daß die Acrylsäure-Einheiten weniger als etwa 66 Mol% der Acrylamid- und Acrylsäure-Einheiten ausmachen.

17. Verfahren zur Bildung eines Block-Copolymeren nach den Ansprüchen 13, 14, 15 oder 16, dadurch gekennzeichnet, daß als stark saurer Katalysator Salzsäure, Flußsäure, Trifluoressigsäure, Schwefelsäure, Salpetersäure, Phosphorsäure, Toluolsulfonsäure, Schwefeltrioxid oder Stickoxide verwendet werden.

18. Verfahren zur Bildung eines Block-Copolymeren nach den Ansprüchen 13 oder 14 bis 17, dadurch gekennzeichnet, daß zusätzlich als Lösungsmittel für das Vorläufer-Block-Copolymere Salpetersäure, DMSO oder DMF verwendet wird.

19. Verfahren nach den Ansprüchen 13 oder 14 bis 18, dadurch gekennzeichnet, daß das Block-Copolymere der Stufe b) durch Abdampfen des sauren Katalysators gewonnen wird.

20. Verfahren nach den Ansprüchen 13 oder 14 bis 18, dadurch gekennzeichnet, daß das Block-Copolymere der Stufe b) durch Neutralisation des sauren Katalysators gewonnen wird.

21. Verfahren nach Anspruch 20, dadurch gekennzeichnet, daß die Neutralisation mit einer Substanz durchgeführt wird, die auch das Lösungsmittel neutralisiert.

22. Verfahren nach Anspruch 21, dadurch gekennzeichnet, daß das aus der Neutralisation resultierende Salz im wesentlichen in Wasser unlöslich ist.

23. Verfahren nach Anspruch 13 oder 14 bis 18, dadurch gekennzeichnet, daß das Block-Copolymere der Stufe b) durch Extraktion mit einer Flüssigkeit gewonnen wird, mit welcher das Block-Copolymere nichtmischbar ist.

24. Verfahren zur Herstellung eines Block-Copolymeren nach Anspruch 1, das Acrylnitril- und hauptsächlich aus Glutarimid-Einheiten gebildete Sequenzen enthält, dadurch gekennzeichnet, daß:

a) Polyacrylnitril mit Salpetersäure während einer für die Hydrolyse einiger der Acrylnitril-Einheiten zu Acrylamid- und Acrylsäure-Einheiten ausreichenden Zeitdauer in Kontakt gebracht wird;

b) ein stark polares Lösungsmittel dem Produkt der Stufe a) zugesetzt wird;

c) die Temperatur der erhaltenen Mischung erhöht und diese Temperatur während einer für die Umwandlung der die Acrylamid-Sequenz bildenden Einheiten in Glutarimid-Einheiten ausreichenden Zeitdauer aufrechterhalten wird; und

d) das die Acrylnitrilsequenzen und hauptsächlich aus Glutarimid-Einheiten gebildeten Sequenzen enthaltende Block-Copolymere gewonnen wird.

25. Verfahren nach Anspruch 24, dadurch gekennzeichnet, daß der Mischung der Stufe c) eine Base zur Gewinnung des Block-Copolymeren zugesetzt wird.